# FASCICULE DE BREVET EUROPEEN

(11) **EP 0 877 571 B1**
(45) Date de publication et mention de la délivrance du brevet: **21.05.2003**
(21) Numéro de dépôt: 97901146.7
(22) Date de dépôt: 23.01.1997
(51) Int. Cl.: A47J 31/06

(54) **PORTE-FILTRE POUR MACHINE A CAFE DU TYPE "ESPRESSO"**
BRÜHKOPF FÜR ESPRESSO-KAFFEEMASCHINE
FILTER HOLDER FOR AN ESPRESSO-TYPE COFFEE MACHINE

(30) Priorité: 25.01.1996 FR 9600883
(43) Date de publication de la demande: 18.11.1998
(73) Titulaire: SEB S.A., 69130 Ecully (FR)
(72) Inventeur: SEGUENOT, Gérard, F-72610 Champfleur (FR); LANDAIS, Joel, F-61250 Conde-sur-Sarthe (FR)
(74) Mandataire: Kiehl, Hubert
(86) Numéro de dépôt international: FR9700128
(87) Numéro de publication internationale: WO97026816

(56) Documents cités:
- EP-A- 0 097 129
- EP-A- 0 402 326
- EP-A- 0 555 775
- EP-A- 0 663 172
- NL-A- 6 709 182

## Description

La présente invention se rapporte à un porte-filtre destiné à être monté sur une tête d'une machine à café du type "espresso" et comprenant une coupelle munie d'une poignée latérale et adaptée à recevoir un filtre formé d'une cage à paroi latérale cylindrique et d'un fond perforé et monté mobile dans l'espace délimité par la cage au moyen d'un dispositif de réglage en hauteur permettant d'obtenir divers dosages de mouture de café, ledit dispositif de réglage en hauteur comprenant, entre le fond perforé et le fond de la coupelle, un empilage d'au moins une couronne montée adjacente au fond (5) et une contre-couronne coaxiale à ladite couronne qui comportent respectivement sur leur face latérale en vis-à-vis une succession alternée de rampes et plages étagées et de contre-rampes et contre-plages étagées, ainsi qu'un organe d'actionnement monté mobile sur la coupelle (1) et adapté à engendrer un déplacement en rotation relatif entre la couronne (8) et la contre-couronne.

Un tel dispositif est notamment décrit dans le document EP-A-555 775.

On connait des porte-filtres où le dispositif de réglage en hauteur comporte généralement une tringlerie compliquée nécessitant des verrouillages sur différentes hauteurs de manière à définir des positions précises du fond perforé dans la cage de la coupelle. Dans ces machines du type "espresso", la pression de l'eau chaude fournie par la pompe de la machine étant située au voisinage de 15 bars, il est impératif que le fond perforé soit maintenu verrouillé à différentes hauteurs tout au long de l'opération d'infusion de manière à garantir le choix d'infusion sélectionné par l'utilisateur, et à éviter toute décompression brutale qui entraînerait la destruction du porte-filtre et des risques de projection de vapeur et d'infusion brûlante hors du filtre.

En outre, on a imaginé des dispositifs de verrouillage par vis-écrou, mais comme on le comprendra le réglage en hauteur s'avère long, fastidieux et sans aucune précision lors du passage d'une opération d'infusion selon un choix de tasse à une autre opération d'infusion selon un autre choix de tasse.

L'invention a notamment pour but de réaliser un porte-filtre qui permet d'obtenir lors de l'infusion sous haute pression une fonction d'auto-tassage de la monture.

Selon l'invention, la contre-couronne est formée de deux anneaux distants supérieur et inférieur, reliés en rotation par des moyens d'ancrage et entre lesquels sont interposés des organes élastiques, de sorte que l'anneau supérieur portant les contre-rampes et contre plages soit monté mobile en translation par rapport à l'anneau inférieur au moyen d'organes de guidage.

Ainsi, cette construction de la contre-couronne en deux pièces montées élastiques entre-elles permet d'obtenir, au cours et en fin de l'opération d'infusion un auto-tassage de la mouture de café qui assure, d'une part, une extraction complète des constituants gustatifs et aromatiques de la mouture, et d'autre part la confection d'une galette pratiquement sèche et facilement jetable.

Les caractéristiques et avantages de l'invention ressortiront d'ailleurs de la description qui va suivre, à titre d'exemple non limitatif, en référence aux dessins annexés dans lesquels :
- la figure 1 est une coupe partielle verticale d'un porte-filtre selon l'invention, monté sur une tête de machine à café et illustrant le fond du filtre en position "une tasse" ;
- la figure 2 est un schéma en coupe d'un développé partiel d'un dispositif de réglage en hauteur selon l'invention et illustré en une position correspondant à celle de la figure 1;
- la figure 3 est une vue analogue à celle de la figure 1, mais dans laquelle le fond du filtre est en position "deux tasses" ;
- la figure 4 est une représentation analogue à celle de la figure 2, mais pour laquelle la position du dispositif de réglage en hauteur correspond à celle de la figure 3 ;
- la figure 5 est une coupe verticale partielle du porte-filtre illustré à la figure 1 et dans laquelle le fond du filtre occupe une position d'éjection.

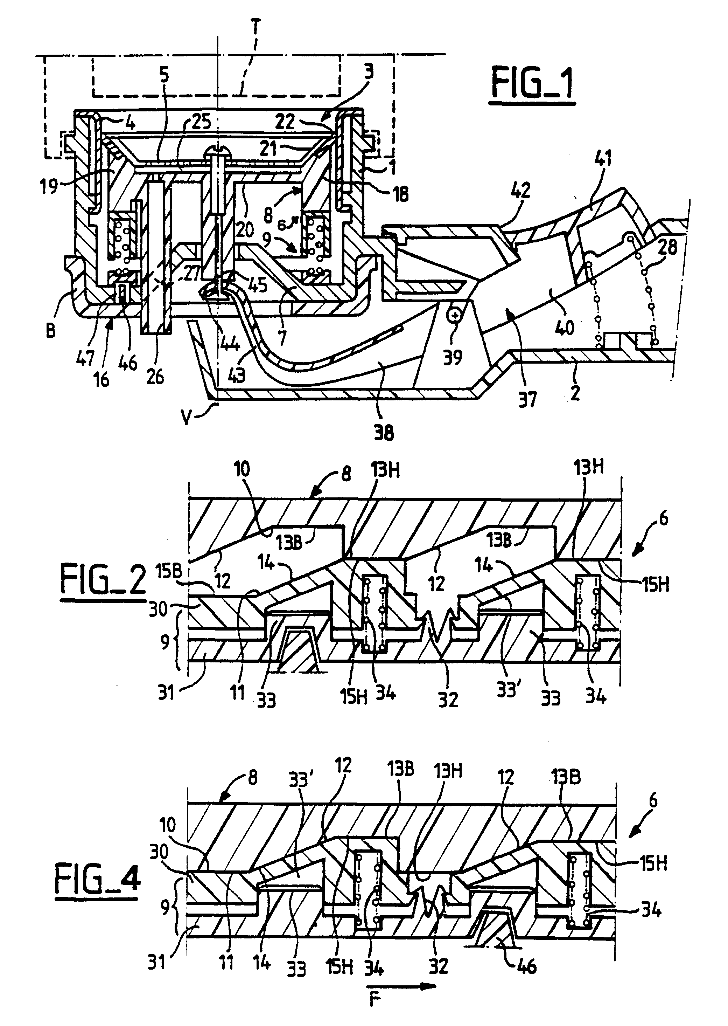

Le porte-filtre illustré aux figures 1, 3 et 5 est destiné à être monté sur une tête T (représentée en traits interrompus) d'une machine à café du type espresso fonctionnant de façon générale avec une pompe électrique susceptible de fournir de l'eau chaude sous une pression, par exemple, de l'ordre de 15 bars. Comme il est connu en soi, le porte-filtre est monté sur la tête T au moyen d'un système à baïonnette et comprend à cet effet une coupelle 1 munie d'une partie de la baïonnette et d'une poignée latérale 2. La coupelle 1 est adaptée à recevoir un filtre 3 formé d'une cage 4 à paroi latérale cylindrique ancrée dans la coupelle 1, et d'un fond 5 perforé réalisé en métal.

Dans le but d'obtenir divers dosages de mouture de café pour préparer une ou plusieurs tasses à café, le fond 5 est monté mobile dans l'espace délimité par la cage 4, selon un axe vertical V coïncidant avec l'axe de ladite cage, au moyen d'un dispositif de réglage en hauteur 6.

Selon l'invention, le dispositif de réglage en hauteur 6 comprend, entre le fond perforé 5 et le fond 7 de la coupelle 1; un empilage d'au moins une couronne 8 montée adjacente au fond perforé 5, et une contre-couronne 9 coaxiale à ladite couronne et comportant (voir figures 2 et 4) respectivement sur leur face latérale 10 et 11 située en vis-à-vis une succession alternée de rampes 12 et plages étagées 13B-13H, et de contre-rampes 14 et contre-plages étagées 15B-15H, ainsi qu'un organe d'actionnement 16 monté mobile sur la coupelle 1 et adapté à engendrer un déplacement en rotation relatif entre la couronne 8 et la contre-couronne 9 pour faire occuper au fond perforé 5 différentes positions en hauteur dans la cage 4.

Dans un mode de réalisation préféré et comme illustré, la couronne 8 est solidaire du fond 5 et comporte un moyen d'immobilisation en rotation 17 par rapport à la cage 4, tandis que la contre-couronne 9 est montée mobile en rotation autour d'un axe commun à l'empilage et correspondant à l'axe V, et est solidaire de l'organe d'actionnement 16, de sorte que la rotation de la contre-couronne 9 entraîne différentes coïncidences entre les plages 13B-13H et contre plages 15B-15H, occasionnant donc différentes hauteurs du fond 5 dans la cage 4.

Comme le montre clairement les figures 2 et 4, les plages 13B-13H et contre-plages 15B-15H sont situées à deux hauteurs différentes de manière à définir deux positions précises et stables du fond 5 correspondant par exemple à une tasse ou deux tasses d'infusion de café.

Ainsi, grâce au dispositif de réglage en hauteur, l'utilisateur peut préparer à volonté et de façon automatique une ou deux tasses de café par simple action sur l'organe d'actionnement 16, entre deux butées prédéfinies, qui détermine par rotation la superposition des plages 13H et contre-plages 15H (figure 2) pour une tasse et des plages 13B et 15H (figure 4) pour deux tasses.

Dans la réalisation telle qu'illustrée aux figures 1, 3 et 5, le fond perforé 5 est monté sur un support cylindrique 18 dont le bord périphérique 19 est adapté à coulisser dans la cage 4, et dont la face inférieure 20 porte, d'une part, la couronne 8, et d'autre part le moyen d'immobilisation 17. Afin d'assurer une parfaite étanchéité entre le fond 5 et la cage 4, ledit fond porte sur son bord périphérique 21 un joint annulaire 22 d'étanchéité qui prend appui également sur le bord périphérique 19 du support 18.

D'autre part, le support 18 présente sur sa face supérieure 24 une cuvette 25 qui est recouverte par le fond perforé 5 et qui communique avec l'extérieur de la coupelle 1 par au moins une pipe descendante 26 d'écoulement de l'infusion qui traverse à cet effet une lumière 27 pratiquée dans le fond 7 de la coupelle. De préférence, le support 18 comporte deux pipes 26, dont une seule est représentée, et qui traverse également une autre lumière (non représentée).

De façon à obtenir une réalisation peu coûteuse et à faciliter la construction du porte-filtre, le moyen d'immobilisation en rotation 17 est constitué par la ou les pipes 26 qui traversent avec faible jeu la ou les lumières 27, la ou les pipes 26 ayant une longueur telle qu'elle permet le déplacement en hauteur du fond 5 sur la hauteur de la cage 4.

Bien entendu, on pourrait réaliser le moyen d'immobilisation 17 selon une autre construction équivalente telle que, par exemple, un indexage latéral entre la paroi latérale de la coupelle 1 et la couronne 8.

De manière à appliquer la couronne 8 et la contre-couronne 9 en prise l'une avec l'autre, le supporte 20 est rappelé, vers la région inférieure de la cage 4, au moyen d'un ressort 28.

Selon une autre caractéristique importante de l'invention, la contre-couronne 9 est formée de deux anneaux distants : supérieur 30 et inférieur 31, reliés en rotation par des moyens d'ancrage 32, et entre lesquels sont interposés des organes élastiques 34, de sorte que l'anneau supérieur 30, portant les contre-rampes 14 et contre-plages 15B-15H, soit monté mobile en translation par rapport à l'anneau inférieur 31. Le guidage en translation est effectué par des bossages 33 portés par l'anneau 31 et qui pénètrent avec faible jeu dans des logements 33' pratiqués dans l'anneau supérieur 30. De préférence, les organes élastiques 34 sont constitués par des ressorts de compression, et sont agencés préférentiellement sous les différentes contre-plages 15 H de manière à égaliser les pressions des plages 13B-13H sur lesdites contre-plages 15H.

Comme il sera expliqué plus loin, cette construction de la contre-couronne 9 en deux anneaux séparés par des ressorts permet d'obtenir lors de l'infusion sous haute pression une fonction d'auto-tassage de la mouture au fur et à mesure de sa prise d'eau chaude.

Outre le dispositif de réglage en hauteur 6, le porte-filtre est équipé d'un dispositif 37 éjecteur de mouture comportant un levier 38 qui est monté pivotant sur un pivot 39 agencé dans la région de jonction de la poignée 2 et de la coupelle 1, et qui comporte en une extrémité 40 une touche 41 saillante d'une ouverture 42 pratiquée dans la poignée, et en l'autre extrémité 43 un organe d'accouplement 44 avec un pion 45 relié au fond perforé 5 et solidaire de la face inférieure 20 du support 18, ledit levier 38 étant également soumis au ressort 28 de rappel du support 20 dans la région inférieure de la cage 4. Comme on le voit sur les figures, le ressort 28 est un ressort de compression et est agencé sous l'extrémité 40, de sorte que le crochet tire toujours le support vers le fond 7 de la coupelle.

Selon un mode de réalisation préférée le pion 45 présente une extrémité en forme d'anneau tandis que l'organe d'accouplement 44 est formé par un crochet qui passe librement dans l'anneau pour suivre le déplacement du support 18.

Dans le but d'expliciter l'imbrication des différentes caractéristiques décrites ci-dessus, on va décrire maintenant le fonctionnement du porte-filtre selon l'invention. Lors d'une première opération, l'utilisateur tenant d'une main la poignée 2 du porte-filtre, manoeuvre, de l'autre main, l'organe d'actionnement 16. Dans le cas présent, cet organe 16 est formé par une bague B montée coaxialement à la contre-couronne 9 à l'extérieur de la coupelle 1. Cette bague comporte un doigt d'entraînement 46 qui fait saillie à travers une lumière 47 en forme d'arc pratiquée dans le fond 7 de la coupelle 1 et qui vient en prise avec la contre-couronne 9 de manière à l'entraîner en rotation selon un angle défini par les extrémités de la lumière 7 formant butées. La bague B est maintenue autour de la coupelle 1 par tous moyens traversant la lumière 47 et de préférence par le doigt 46 qui porte à cet effet des pattes latérales (non représentées) qui viennent en prise avec le bord interne de la lumière 47.

Si l'utilisateur choisit de préparer une tasse (figure 1), la bague B amène la contre-couronne 9 et la couronne 8 en la position illustrée à la figure 2 et dans laquelle les plages 13H sont en appui sur les contre-plages 15H. Cette position amène le support 18 et donc le fond perforé 5 dans la partie haute de la cage laissant subsister un faible espace entre le fond et le bord supérieur du filtre 3 pour recevoir la mouture de café.

Dans une seconde opération, l'utilisateur fixe le porte-filtre sur la tête T de la machine au moyen du dispositif à baïonnette. Puis, la machine envoie de l'eau chaude sous pression (15 bars) pour faire gonfler la mouture et pour réaliser l'infusion de café qui s'écoule alors par la ou les pipes 26.

Au cours de cette préparation d'infusion, le gonflement de la mouture exerce, en plus de la pression d'eau, une pression sur le fond perforé 5 qui se transmet via la couronne 8 sur l'anneau 30 de la contre-couronne 9, et partant sur les ressorts 34 qui se compriment jusqu'au contact des deux anneaux 30 et 31. Lors de l'écoulement de l'infusion, la masse de mouture s'amenuise lentement permettant au fond 5 de remonter très légèrement sous la pression des ressorts 34.

A la fin du remplissage de la tasse par l'infusion, l'utilisateur arrête le fonctionnement de la pompe ce qui coupe l'arrivée d'eau sous pression. Dès cet instant les ressorts 34 repoussent fortement l'anneau 30 vers le haut entraînant ainsi le fond 5 vers la tête T de la machine et provoquant un essorage de la mouture jusqu'à obtenir une galette rigide pratiquement sèche.

Dans une troisième opération, l'utilisateur déverrouille le porte-filtre de la tête et peut procéder à l'éjection de la galette de mouture hors du filtre 3. Pour ce faire, tout en tenant la poignée, il exerce, par son pouce, une pression sur la touche 41 à l'encontre du ressort 28 provoquant le pivotement du levier 38 dont le crochet, en appui sur le pion 45, repousse le support 18 vers le haut de la cage 4 jusqu'à amener comme illustré à la figure 5 le fond perforé 5 au voisinage du bord supérieur de la cage 4, et donc la galette de mouture hors du filtre 3. Au cours de ce coulissement dans la cage, le support 18 et sa couronne 8 sont bien guidés linéairement par la ou les pipes 26, de sorte que le dispositif de réglage conserve toujours la position de réglage choisie.

Ainsi, l'on comprendra qu'un simple retournement du porte-filtre au moyen de la poignée 2 fera tomber la galette de mouture hors du filtre 3.

Dès que l'utilisateur relâche la pression sur la touche 41, le ressort 28 fait pivoter le levier en sens contraire, provoquant la traction du crochet sur l'anneau et donc le coulissement du support 18 et du fond perforé 5 en direction du fond 7 de la coupelle jusqu'à positionner la couronne 8 et donc les plages 13H en appui sur les contre-plages 15H, position de départ illustrée à la figure 2.

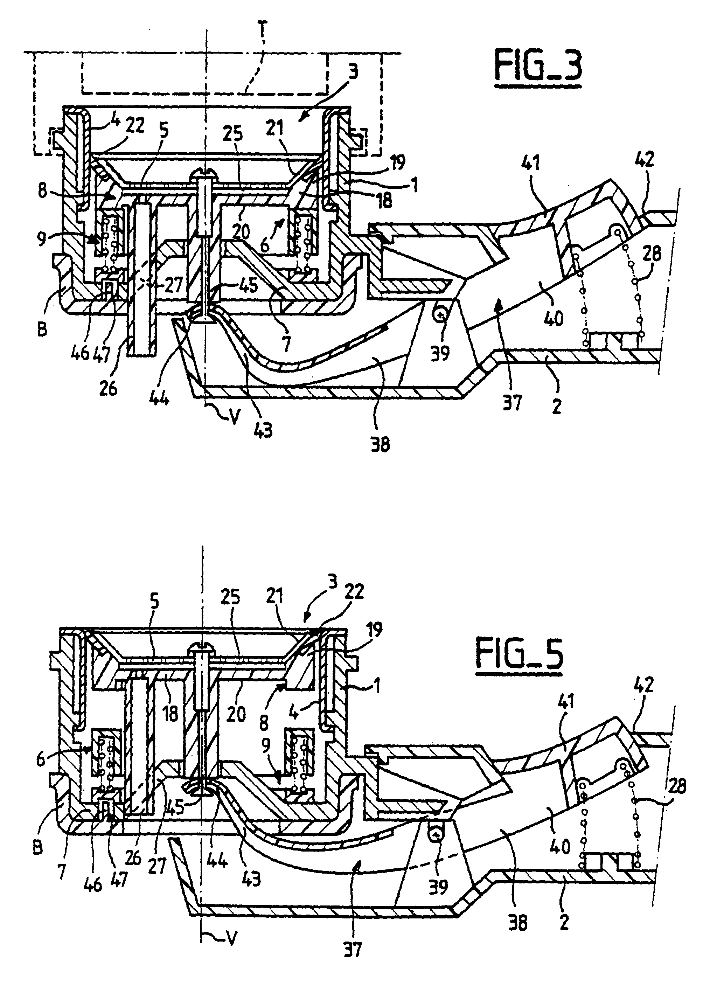

Supposons maintenant que l'utilisateur souhaite préparer deux tasses de café. Partant de la position illustrée aux figures 1 et 2, l'utilisateur saisit la bague B et par un mouvement de contre-rotation selon la fiche F de la figure 4, amène par le doigt 46 la contre-couronne 9 à tourner autour de l'axe V. Cette rotation fait glisser les contre-plages 15H sur les plages 13H, les contre-rampes 14 sur les rampes 12 jusqu'à amener les contre-plages 15H sur les plages 13B, définissant ainsi la position correspondant à deux tasses pour laquelle le fond perforé 5 est situé dans la région inférieure de la cage 4 comme illustré à la figure 3. Comme on le voit, en cette position, la capacité du filtre 3 est nettement supérieure à la capacité représentée à la figure 1.

Les autres opérations d'infusion et d'éjection de la galette de mouture se font de la même manière qu'explicitée ci-dessus pour la préparation d'une tasse.

## Revendications

1. Porte-filtre destiné à être monté sur une tête (T) d'une machine à café du type "espresso" et comprenant une coupelle (1) munie d'une poignée latérale (2) et adaptée à recevoir un filtre (3) formé d'une cage (4) à paroi latérale cylindrique et d'un fond (5) perforé et monté mobile dans l'espace délimité par la cage (4) au moyen d'un dispositif de réglage en hauteur (6) permettant d'obtenir divers dosages de mouture de café, ledit dispositif de réglage en hauteur (6) comprenant, entre le fond perforé (5) et le fond (7) de la coupelle (1), un empilage d'au moins une couronne (8) montée adjacente au fond (5) et une contre-couronne (9) coaxiale à ladite couronne qui comportent respectivement sur leur face latérale (10-11) en vis-à-vis une succession alternée de rampes (12) et plages étagées (13B-13H) et de contre-rampes (14) et contre-plages étagées (15B-15H), ainsi qu'un organe d'actionnement (16) monté mobile sur la coupelle (1) et adapté à engendrer un déplacement en rotation relatif entre la couronne (8) et la contre-couronne (9), **caractérisé en ce que**
la contre-couronne (9) est formée de deux anneaux distants supérieur (30) et inférieur (31), reliés en rotation par des moyens d'ancrage (32) et entre lesquels sont interposés des organes élastiques (34), de sorte que l'anneau supérieur (30) portant les contre-rampes (14) et contre plages (15B-15H) soit monté mobile en translation par rapport à l'anneau inférieur (31) au moyen d'organes de guidage (33).

2. Porte-filtre selon la revendication 1, **caractérisé en ce que**
les organes élastiques (34) sont constitués par des ressorts de compression, et sont agencés de préférence sous les différentes contre-plages (15H).

## Patentansprüche

1. Siebträger zur Montage an einem Kopf (T) einer Espresso-Kaffeemaschine mit einem Becher (1) mit einem seitlichen Handgriff (2), der zur Aufnahme eines Filtersiebs (3) eingerichtet ist, das von einem Schacht (4) mit seitlicher zylindrischer Wand und einem perforierten Boden (5) gebildet ist und in dem vom Schacht (4) begrenzten Raum mittels einer Höhenverstellvorrichtung (6) beweglich gehalten ist, welche verschiedene Dosierungen des Kaffeemehls ermöglicht, wobei die Höhenverstellvorrichtung (6) zwischen dem perforierten Boden (5) und dem Boden (7) des Bechers (1) einen Stapel von mindestens einem Kranz (8), der dem Boden (5) benachbart angeordnet ist, und einem zu diesem Kranz koaxialen Gegenkranz (9) aufweist, die jeweils an ihrer Seitenfläche (10-11) gegenüberliegend eine abwechselnde Folge von Rampen (12) und abgestuften Bereichen (13B-13H) und Gegenrampen (14) und abgestuften Gegenbereichen (15B-15H) aufweisen, sowie ein im Becher (1) beweglich montiertes Betätigungselement (16) aufweist, das zur Erzeugung einer relativen Drehbewegung zwischen dem Kranz (8) und dem Gegenkranz (9) eingerichtet ist, **dadurch gekennzeichnet, daß** der Gegenkranz (9) von zwei voneinander entfernten Ringen, einem oberen Ring (30) und unteren Ring (31) gebildet ist, die durch eine Verankerungsvorrichtung (32) drehfest verbunden sind und zwischen denen elastische Elemente (34) eingeschaltet sind, so daß der die Gegenrampen (14) und Gegenbereiche (15B-15H) tragende obere Ring (30) bezüglich des unteren Ringes (31) mittels Führungselementen (33) verschiebbar gehalten ist.

2. Siebträger nach Anspruch 1, **dadurch gekennzeichnet, daß** die elastischen Elemente (34) aus Druckfedern bestehen und vorzugsweise unter den verschiedenen Gegenbereichen (15H) angeordnet sind.

## Claims

1. Filter holder intended to be mounted on a head (T) of a coffee machine of the "espresso" type and comprising a cup (1) provided with a side handle (2) and adapted to receive a filter (3) formed by a cage (4) with a cylindrical side wall and a perforated bottom (5) and mounted so as to be able to move in the space delimited by the cage (4) by means of a height-adjustment device (6) making it possible to obtain various apportionings of ground coffee, said height-adjustment device (6) comprising, between the perforated bottom (5) and the bottom (7) of the cup (1), a stack of at least one ring (8) mounted adjacent to the bottom (5) and a counter-ring (9) coaxial with said ring, which have respectively on their facing side faces (10-11) an alternating succession of ramps (12) and stepped areas (13B-13H) and counter-ramps (14) and stepped counter-areas (15B-15H), as well as an actuation member (16) mounted so as to be able to move on the cup (1) and adapted to cause a movement in relative rotation between the ring (8) and the counter-ring (9), **characterised in that** the counter-ring (9) is formed by two distant annuli, top (30) and bottom (31), rotationally connected by anchoring means (32) and between which elastic members (34) are interposed, so that the top annulus (30) carrying the counter-ramps (14) and counter-areas (15B-15H) is mounted so as to be able to move in translation with respect to the bottom annulus (31) by means of guidance members (33).

2. Filter holder according to claim 1, **characterised in that** the elastic members (34) are constituted by compression springs, and are preferably arranged under the various counter-areas (15H).
